# EUROPÄISCHE PATENTSCHRIFT

(11) **EP 0 424 388 B1**
(45) Veröffentlichungstag und Bekanntmachung des Hinweises auf die Patenterteilung: **06.07.1994**
(21) Anmeldenummer: 89903683.4
(22) Anmeldetag: 06.04.1989
(51) Int. Cl.: B24B 45/00, B24B 23/02, B23C 5/26, B27B 5/32

(54) **SPANNEINRICHTUNG ZUM AXIALEN FESTSPANNEN EINES WERKZEUGES, INSBESONDERE EINER SCHEIBE**
DEVICE FOR AXIALLY CLAMPING A TOOL, IN PARTICULAR A GRINDING WHEEL
AGENCEMENT DE SERRAGE AXIAL D'OUTILS, NOTAMMENT DE MEULES

(30) Priorität: 15.07.1988 DE 3824040
(43) Veröffentlichungstag der Anmeldung: 02.05.1991
(73) Patentinhaber: ROBERT BOSCH GMBH, 70442 Stuttgart (DE)
(72) Erfinder: SCHÄFER, Dieter, D-7250 Leonberg (DE); KÖBER, Karl-Ernst, D-7447 Grötzingen (DE); LASCH, Volker, D-7000 Stuttgart (DE); TREYZ, Karl, D-7022 Leinfelden-Echterdingen (DE); KIRN, Manfred, D-7000 Stuttgart 80 (DE); BORST, Erich, D-7022 Leinfelden-Echterdingen (DE); SCHAAL, Günter, D-7000 Stuttgart 80 (DE); METZGER, Kurt, D-7022 Leinfelden-Echterdingen (DE)
(86) Internationale Anmeldenummer: DE8900210
(87) Internationale Veröffentlichungsnummer: WO9000463

(56) Entgegenhaltungen:
- EP-A- 0 231 500
- WO-A-88/05366
- DE-C- 3 012 836
- DE-C- 3 705 638
- FR-A- 2 101 513
- GB-A- 825 877
- US-A- 4 525 097

## Beschreibung

Die Erfindung geht aus von einer Spanneinrichtung zum axialen Festspannen eines Werkzeuges, insbesondere einer Scheibe, an einem Flansch einer angetriebenen Spindel mit den Merkmalen des Oberbegriffs der Ansprüche 1 bzw. 30. Spanneinrichtungen dieser Art haben sich bewährt. Die dadurch erzielten Vorteile sind in der EP-A1-345 271 herausgestellt. Auf diese wird zur Vermeidung unnötiger Wiederholungen hiermit ausdrücklich verwiesen. Die Anschläge, an denen einerseits die Rollkörper und andererseits die Federn anschlagen, bedingen dann, wenn diese Anschläge entweder an der Spannscheibe oder der Spannmutter vorgesehen sind, noch relativ komplizierte und bezüglich ihrer Herstellung teure Teile. Man müßte diese z.B. als Sinterteile oder Fließpreßteile ausführen. Dies ist jedoch bei Sinterteilen aus Festigkeitsgründen problematisch und bei Fließteilen wegen der erforderlichen Nacharbeit sehr teuer. Dort, wo die Stützkörper auf der Spannmutter und Spannscheibe aufliegen und axial abgestützt sind, strebt man zur Verringerung des Verschleißes und Erlangung großer Lebensdauer gehärtete Flächen an. Das Härten der Spannscheibe oder der Spannmutter in diesem Bereich wäre ebenfalls aufwendig und teuer. Ziel der Erfindung ist es daher, die Spanneinrichtung nach EP-A1-345 271 dahingehend zu verbessern, daß die einzelnen Teile, insbesondere Spannmutter und/oder Spannscheibe, einfacher gestaltet und daher einfacher und kostengünstiger hergestellt werden können.

### Vorteile der Erfindung

Bei der erfindungsgemäßen Spanneinrichtung mit den kennzeichnenden Merkmalen des Hauptanspruchs ergeben sich folgende Vorteile. Das separate Einlageteil, z.B. in der Gestaltung als Blechformteil und hierbei z.B. als Blechstanzteil, ist einfach und kostengünstig. Es lassen sich aus diesem Einlageteil die einzelnen benötigten Elemente schnell und kostengünstig herausarbeiten. Das Einlageteil ist so gestaltet, daß es axial entweder an der Spannscheibe oder aber an der Spannmutter aufliegt und abgestützt ist. Dabei ist die Voraussetzung dafür geschaffen, daß Segmente dieses Einlageteiles auf ihrer Oberseite die Stützfläche bilden, auf denen die Stützkörper mit ihrer zugewandten schrägen Stützfläche aufliegen und abgestützt sind. Zumindest diese, die Stützflächen tragenden Segmente des Einlageteiles können gehärtet werden, so daß diese Stützflächen eine große Lebensdauer garantieren. Aus dem Einlageteil, z.B. Blechformteil, ist zum einen der jeweilige Anschlag herausgearbeitet, an dem einerseits ein Rallkörper und andererseits das Zugewandte Ende der Feder abgestützt ist. Auch die Sicherungsteile, die eine Sicherung in Umfangsrichtung des Einlageteiles relativ zur Spannscheibe bzw. Spannmutter bewirken, lassen sich aus dem Einlageteil z.B. in Form herausgeschnittener und abgebogener Nasen bilden. Auch die Positionierglieder, die die einzelnen Stützkörper in Umfangsrichtung positionieren und in Abstand voneinander halten, lassen sich durch entsprechende eingeschnittene und hochgebogene Anschlagteile aus dem Einlageteil bilden, so daß auch dafür keine zusätzlichen aufwendigen, separaten Elemente nötig sind. Gleichzeitig lassen sich aus dem Einlageteil auch Montagesicherungen ausschneiden und abbiegen, die bei der Montage die Federn sichern. Ein derartiges Einlageteil, insbesondere Blechformteil, ist einfach und kostengünstig und macht es möglich, die Spannmutter und Spannscheibe besonders einfach und billig herzustellen, nämlich jeweils als einfache Drehteile. Die Spanneinrichtung wird dadurch erheblich kostengünstiger.

Durch die in den Unteransprüchen aufgeführten Merkmale sind vorteilhafte Weiterbildungen und Verbesserungen der im Hauptanspruch angegebenen Spanneinrichtung möglich. Eine eigenständig erfinderische Lösung ergibt sich aus Anspruch 30 und den Ansprüchen 31 - 33. Dadurch ist mit einfachen Mitteln eine Sicherung gegen etwaiges selbsttätiges Lösen der Spanneinrichtung aufgrund von Vibrationen od. dgl. geschaffen.

Der vollständige Wortlaut der Ansprüche ist vorstehend allein zur Vermeidung unnötiger Wiederholungen nicht wiedergegeben, sondern statt dessen lediglich durch Nennung der Anspruchsnummer darauf Bezug genommen, wodurch jedoch alle diese Anspruchsmerkmale als an dieser Stelle ausdrücklich und erfindungswesenlich offenbart zu gelten haben.

### Zeichnung

Ausführungsbeispiele der Erfindung bzw. die Lösung gemäß EP-A1-345 271 sind in der Zeichnung dargestellt und in der nachfolgenden Beschreibung näher erläutert. Es zeigen:
- Fig. 1: einen schematischen axialen Längsschnitt einer Spanneinrichtung als Teil eines Winkelschleifers mit eingespannter Schleifscheibe, im Schnitt entlang der Linie I-I in Fig. 2, gemäß EP-A1-345 271,
- Fig. 2 und 3: jeweils einen schematischen Schnitt entlang der Linie II-II bzw. III-III in Fig. 1,
- Fig. 4: einen schematischen Schnitt entlang der Linie IV-IV in Fig. 2,
- Fig. 5: eine schematische, teilweise geschnittene Draufsicht mit Teilen der Spanneinrichtung,
- Fig. 6: einen schematischen, axialen Längsschnitt etwa entsprechend demjenigen in Fig. 1 einer Spanneinrichtung gemäß einem zweiten Ausführungsbeispiel, im Schnitt entlang der Linie VI - VI in Fig. 7,
- Fig. 7: einen schematischen Schnitt entlang der Linie VII - VII in Fig. 6,
- Fig. 8: eine Draufsicht des Einlageteils der Spanneinrichtung in Fig. 6 und 7,
- Fig. 9 und 10: jeweils einen schematischen Schnitt entlang der Linie IX - IX bzw. X - X in Fig. 8.

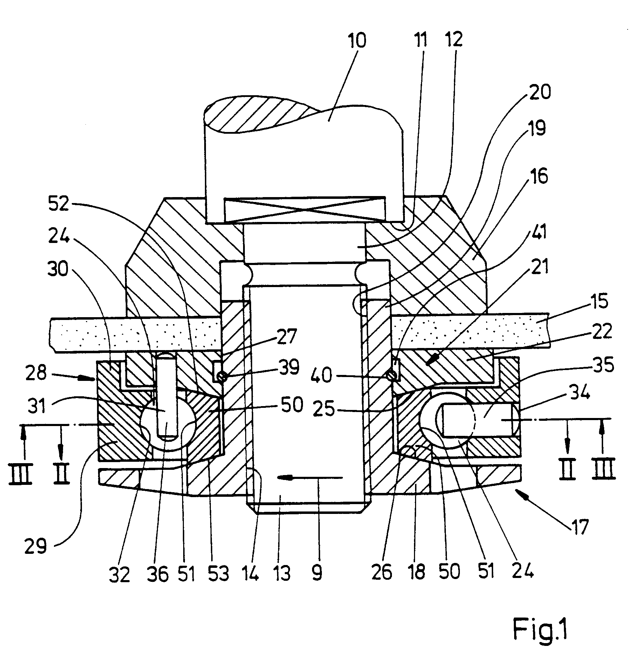

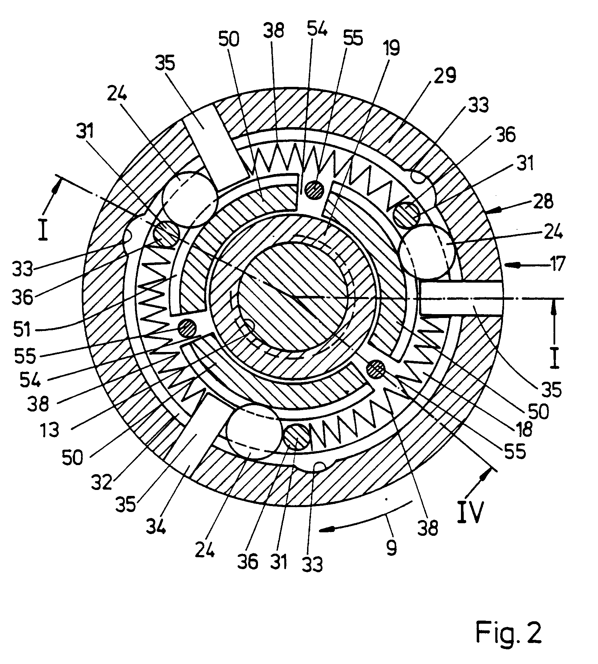

Die nachfolgende Beschriebung zu den Figuren 1 bis 5 bezicht sich auf die Lösung gemäß dem nach veröffentlichten EP-A1 345 271
In Fig. 1 - 5 ist der untere Teil einer z.B. als Winkelschleifer gestalteten, tragbaren Handwerkzeugmaschine gezeigt, die eine motorisch und über ein nicht gezeigtes Getriebe angetriebene Spindel 10 aufweist, die am Ende über eine Ringschulter 11 in einen zylindrischen Absatz 12 kleineren Durchmessers und sodann in einen endseitigen Gewindeabsatz 13 mit Außengewinde 14 übergeht. Die Spindel 10 dient zum Antrieb eines Werkzeuges 15, das z.B. aus der angedeuteten Schleifscheibe oder einer anderen Werkzeugscheibe, einem Gummiteller od.dgl. besteht. Das Werkzeug 15 ist zwischen einem Flansch 16 und einem Spannglied, das Teil einer Spannmutter 17 ist und später noch näher erläutert ist, eingespannt und festgespannt. Der Flansch 16 ist axial an dar Ringschulter 11 abgestützt und radial auf dem zylindrischen Absatz 12 zentriert. Durch zusammenpassende Formflächen, z.B. zwei zueinander parallele Abflachungen, an der Spindel 10 und am Flansch 16 hat letzterer drehfesten Formschluß mit der Spindel 10, von der er bei eingeschaltetem Motor in Umlaufrichtung gemäß Pfeil 9 drehfest mitgenommen wird. Diese Umlaufrichtung gemäß Pfeil 9 entspricht der Arbeitsrichtung des Werkzeuges 15, in der dieses angetrieben ist. Diese entspricht in Draufsicht gemäß Fig. 2 dem Uhrzeigersinn. Die Spannmutter 17 weist einen Flansch 18 und eine davon abgehende, zylinderhülsenförmige Nabe 19 auf und ist in dieser mit einem durchgängigen Innengewinde 20 versehen, mit dem die Spannmutter 17 auf das Außengewinde 14 des Gewindeabsatzes 13 aufgeschraubt ist. Auf der äußeren Umfangsfläche der Nabe 19 ist beim Befestigen das Werkzeug 15 zentriert.

Im Axialbereich zwischen dem Werkzeug 15 und der Spannmutter 17 ist eine Spannscheibe 21 angeordnet, die einen gegen das Werkzeug 15 drückenden Spannteller 22 aufweist. Die Spannscheibe 21 ist von der Spannmutter 17 her mit einer axial gerichteten Druckkraft beaufschlagbar und in der Lage,axial gegen das Werkzeug 15 zu drücken und dieses gegen die axiale Stirnseite des Flansches 16 fest anzupressen.

Die Spannscheibe 21 ist mit der Spannmutter 17 axial verschiebbar jedoch undrehbar gekoppelt. Axial zwischen der Spannscheibe 21 und dem Flansch 18 der Spannmutter 17 sind Stützkörper 50 angeordnet. Den Stützkörpern 50 ist auf der zugewandten Seite des Flansches 18 der Spannmutter 17 eine Stützfläche in Form einer Ringfläche 26 zugeordnet. Der gegenüberliegenden Axialseite der Stützkörper 50 ist ebenfalls eine Stützfläche zugeordnet, die aus einer Ringfläche 25 auf der zugewandten Seite des Spanntellers 22 der Spannscheibe 21 besteht.

Zwischen der Spannscheibe 21 und der Spannmutter 17 ist ein Betätigungsglied 28 in Form eines Ringes 29 angeordnet, der mit einem in Fig. 1 oberen Ringkragen 30 den Spannteller 22 in Axialrichtung übergreift unter Belassung von Bewegungsspiel dazwischen Der Ringkragen 30 endet axial in Abstand und gemäß Fig. 1 unterhalb der am Werkzeug 15 anliegenden Stirnfläche des Spanntellers 22. Der Ring 29 sitzt axial mit Bewegungsspiel zwischen der Spannscheibe 21 und der Spannmutter 17 und ist relativ zu beiden drehbar gehalten. Im Inneren enthält der Ring 29 eine im Querschnitt etwa rinnenförmige Ringfläche 32, die bei einem anderen, nicht gezeigten Ausführungsbeispiel auch zylindrisch sein kann. Auf gleicher axialer Höhe weisen die Stützkörper 50 auf ihrer radial äußeren Umfangsfläche eine entsprechende, rillenförmig vertiefte Ringfläche 51 auf. Die Stützkörper 50 sind mittels auf den Ringflächen 32 und 51 geführter und abrollender Rollkörper 24, die hier aus Kugeln bestehen, radial beaufschlagt. Drei in etwa gleichen Umfangswinkelabständen voneinander angeordnete Kugeln 24 sind auf den zur Mittelachse konzentrischen Ringflächen 32 und 51 geführt und stehen dabei in Berührung mit den Stützkörpern 50 einerseits und dem Betätigungsglied 28 andererseits. Das Betätigungsglied 28 arbeitet auf die Kugeln 24, die von jenem in der der restspannrichtung entsprechenden Richtung gegensinnig zum Pfeil 9 gegen Anschläge 31 der Spannscheibe 21 gedrückt werden. Dieser Spannzustand ist in Fig. 1 bis 5 gezeigt.

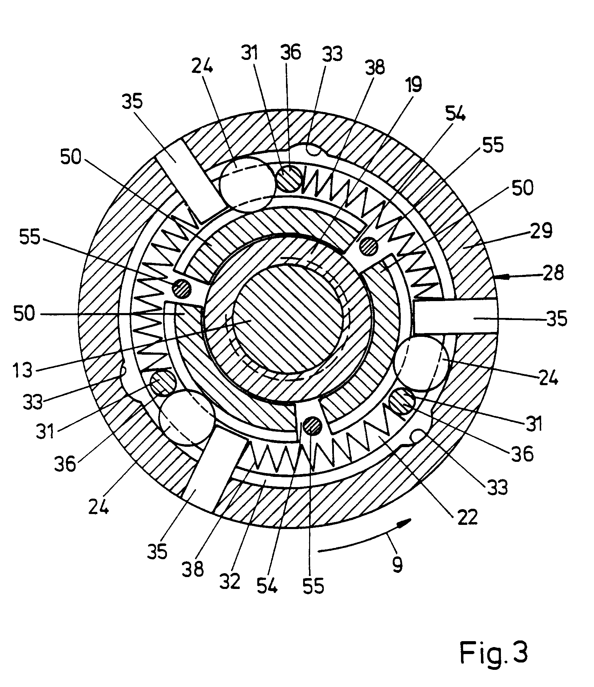

Wie aus Fig. 2 und 3 ersichtlich ist, ist im Bereich der Ringfläche 32 des Betätigungsgliedes 28 für jede Kugel 24 eine dieser zugeordnete Aussparung 33 enthalten, die jeweils aus einer Vertiefung in der Ringfläche 32 besteht und insbesondere als in radialer Richtung nach außen hin eingetiefte Kugeltasche ausgebildet ist, die in Richtung zum Zentrum offen ist. Jede Aussparung 33 ist dabei so beschaffen, daß beim Abrollen der Kugeln 24 und bei Erreichen der jeweils zugeordneten Aussparung 33 die Kugeln 24 in Radialrichtung nach außen auswandern können, wodurch sich eine radiale Entlastung der Stützkörper 50 ergibt, so daß die Stützkörper 50 sich radial von innen nach außen zumindest geringfügig versetzen können. Dabei reicht es, daß zumindest eine der beiden Ringflächen 25, 26, zwischen denen die Stützkörper 15 axial angeordnet sind, kegelstumpfförmig und dabei mit derart ausgerichteter Kegelspitze ausgebildet sind, daß die Stützkörper 50 bei dieser radialen Entlastung und Radialverschiebung auf dieser schrägen Ringfläche 25 und/oder 26 eine Axialbewegung der Spannscheibe 21 in Richtung zur Spannmutter 17 zulassen, zumindest mit geringfügiger Verringerung des Axialabstandes, so daß die Spannscheibe 21 vom Spanndruck entlastet wird.

Bei der gezeigten Lösung ist sowohl die abstützende Ringfläche 25 der Spannscheibe 21 als auch die abstützende Ringfläche 26 der Spannmutter 17 kegelstumpfförmig und in beschriebener Weise ausgebildet, so daß beide Ringflächen 25, 26 zusammen eine Keilnut bilden. Die Stützkörper 50 weisen sowohl auf der Axialseite, die der Ringfläche 25 zugewandt ist, als auch auf der gegenüberliegenden Axialseite dem Verlauf der jeweiligen Ringfläche 25 bzw. 26 entsprechende Auflageflächen 52 bzw. 53 auf. Jeder Stützkorper 50 hat etwa Keilquerschnitt, wobei der Keilwinkel demjenigen der Keilnut, gebildet durch die Ringflächen 25, 26, zumindest im wesentlichen entspricht. Wie aus Fig. 2 und 3 ersichtlich ist, sind die einzelnen Stützkörper 50 jeweils als Kreisringsegmente gebildet. Hier sind drei solcher kreisringsegmentförmiger Stützkörper 50 vorgesehen, die in etwa gleichen Umfangswinkelabständen voneinander angeordnet sind. Dabei sind zwischen den aneinander angrenzenden Stützkörpern 50 jeweils Lücken 54 belassen, in die etwa achsparallele Positionierglieder 55 in Form von Stiften hineinragen. Diese Stifte 55 befinden sich außerhalb des Rollbereiches der Kugeln 24, so daß sie deren Abrollbewegung zwischen den Ringflächen 32 und 51 nicht behindern. Die Stifte 55 sind an der Spannscheibe 21 befestigt und stehen über deren stützende Ringfläche 25 über. Bei einem anderen, nicht gezeigten Beispiel sind die Stifte 55 statt dessen an der Spannmutter 17 angebracht. Die Stifte 55 positionieren die Stützkörper 50 in Umfangsrichtung in ihrer Lage und gewährleisten, daß sich die Stützkörper 50 in Umfangsrichtung nicht versetzen.

Das Betätigungsglied 28 ist je Kugel 24 mit einem festen Mitnehmer 34 in Form eines am Ring 29 fest angebrachten Radialstiftes 35 versehen, der radial von außen nach innen in die Bahn der jeweils vorgelagerten Kugel 24 zumindest so weit hineinragt, daß dabei z.B. eine etwa tangentiale Anlage an der jeweils vorgelagerten Kugel 24 erfolgt.

Die Anschläge 31 der Spannscheibe 21 sind aus etwa achsparallelen Längsstiften 36 gebildet, die etwa achsparallel durch die von den Ringflächen 32 und 51 zusammen gebildete Führungsrille für die Kugeln 24 hindurchgreifen und dabei so, daß noch ausreichender Zwischenraum zwischen der Innenfläche des Ringes 29 und den Längsstiften 36 besteht, so daß diese bei der Relativdrehung zwischen dem Betätigungsglied 28 einerseits und der Spannmutter 17 mit Spannscheibe 21 andererseits nicht am Betätigungsglied 28 schleifen. Die Längsstifte 36 befinden sich jeweils auf der dem Radialstift 35 je Kugel 24 gegenüberliegenden, anderen Seite der jeweils zugeordneten Kugel 24. In der in Fig. 1 - 5 gezeigten Spannstellung bei festgespanntem Werkzeug 15 und eingeschaltetem Motor wird über die Klemmkraft und Reibung mit dem Werkzeug 15 auch die Spannscheibe 21 in Arbeitsrichtung gemäß Pfeil 9 mitgenommen. Da die Spannscheibe 21 zwar axial relativ verschieblich jedoch in Umfangsrichtung drehfest mit der Spannmutter 17 gekoppelt ist, wird dadurch gleichermaßen auch die Spannmutter 17 mitgenommen. Die Längsstifte 36 schlagen dabei in Pfeilrichtung 9 an den jeweils vorgelagerten Kugeln 24 an, die dabei gegen die jeweils vorgelagerten Radialstifte 35 des Betätigungsgliedes 28 drücken. Das Betätigungsglied 28 ist gegensinnig zur Umlaufrichtung gemäß Pfeil 9, die zugleich der Löserichtung entspricht, federbelastet. Dies ist durch jeweilige zylindrische Schraubenfedern 38 erreicht, die innerhalb der von den Ringflächen 32 und 51 gebildeten Führungsrille für die Kugeln 24 plaziert und in Umfangsrichtung wirksam sind. Jede Schraubenfeder 38 ist dabei im Umfangsbereich zwischen einem Längsstift 36 und einem Radialstift 35 angeordnet und endseitig an diesen abgestützt. Mittels dieser Schraubenfedern 38 ist das Betätigungsglied 28 relativ zur Spannmutter 17 und Spannscheibe 21 in der zum Pfeil 9 gegensinnigen Richtung derart federelastisch beaufschlagt, daß der jeweilige Radialstift 35 die jeweils vorgelagerte Kugel 24 in Richtung gegensinnig zum Pfeil 9 gegen den vorgelagerten Längsstift 36 drückt. Über die Schraubenfedern 38 ist das Betätigungsglied 28 mithin in der in Fig. 1 - 5 gezeigten Spannstellung, relativ zur Spannmutter 17 mit Spannscheibe 21, gehalten.

Die Spannscheibe 21 ist an der Spannmutter 17 axial so gesichert, daß eine zumindest geringfügige Axialbewegung zwischen beiden möglich ist. Die Spannscheibe 21 weist eine durchgängige Innenfläche 27 im Bereich des Spanntellers 22 auf, die grundsätzlich zylindrisch sein kann und von der Nabe 19 der Spannmutter 17 durchsetzt ist, auf der der Spannteller 22 zentriert und zumindest in Grenzen axial beweglich gehalten und geführt ist. Zur Sicherung kann ein in Fig. 1 nur schematisch angedeuteter Federring 39 dienen, der in einer Nut 40 auf der äußeren Umfangsfläche der Nabe 19 der Spannmutter 17 im wesentlichen paßgenau aufgenommen ist, und zwar so, daß der Federing 39 in die Nut 40 etwa mit seinem halben Querschnitt eintaucht, während die andere Hälfte seines Querschnitts radial übersteht. Die Spannscheibe 21 enthält auf der Innenfläche 27 eine dem Federring 39 zugeordnete Nut 41, die jedoch eine größere Axialbreite als der Federring 39 und die Nut 40 aufweist. Die radial gemessene Tiefe der Nut 41 entspricht etwa der anderen Hälfte des Querschnitts des Federringes 39. Nicht besonders gezeigt ist, daß die Flanken der Nut 40 und/oder 41 angeschrägt sein können, wodurch ein leichtes Zusammenschieben und späteres Lösen der Spannscheibe 21 und Spannmutter 17 in Axialrichtung möglich ist. Bei der vorstehend beschriebenen Ausbildung mit zylindrischer Innenfläche 27 und zylindrischer Außenfläche der Nabe 19 erfolgt die drehmomentübertragende Kopplung zwischen der Spannscheibe 21 und der Spannmutter 17 z.B. über die Längsstifte 36, die axial bis hin zum Flansch 18 der Spannmutter 17 verlängert sind und in dortige Bohrungen mit axialem Schiebespiel eingreifen.

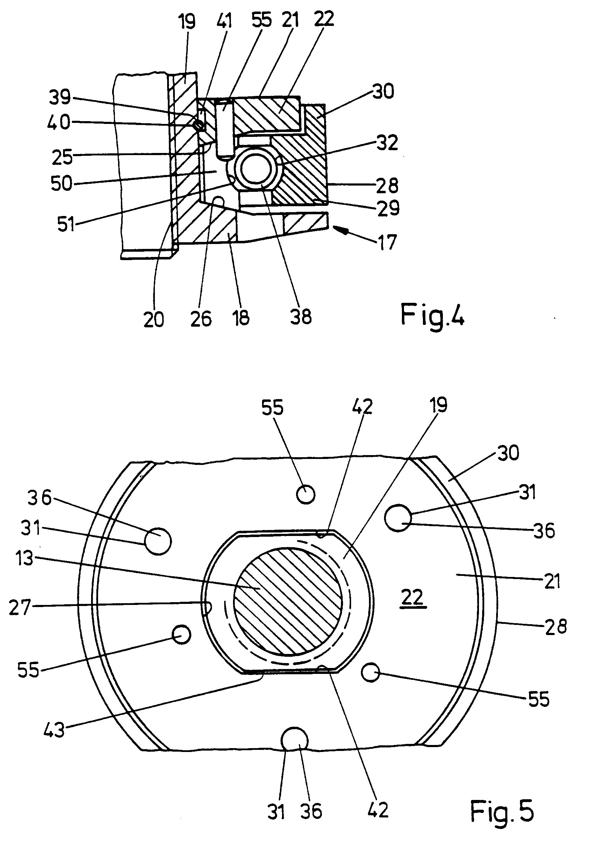

Bei der Lösung gemäß Fig. 1 bis 5 erfolgt die drehfeste Kopplung statt dessen durch äußere Formflächen. Wie Fig.5 zeigt, ist die Innenfläche 27 des Spanntellers 22 der Spannscheibe 21 abweichend von der Zylinderfom mit zwei diametral gegenüberliegenden Flachflächen 42 versehen. In entsprechender Zuordnung weist die Nabe 19 der Spannmutter 17 auf gleichem Axialbereich entsprechende äußere Flachflächen 43 auf, so daß über die Flachflächen 42 und 43 eine formschlüssige Kupplung in Umfangsrichtung erfolgt, die jedoch zumindest in Grenzen eine axiale Relativverschieblichkeit ermöglicht. Statt eines Federringes 39 ist dann eine z.B. etwa haarnadelförmige Federspange vorgesehen, deren beide Schenkel die Schnittdarstellung in Fig. 1 und 4 erkennen läßt, für die das zuvor beschriebene gilt.

In den Zwischenräumen zwischen dem Ring 29 und der Spannscheibe 21 auf dessen einer Axialseite sowie dem Flansch 18 der Spannmutter 17 auf dessen anderer Axialseite können nicht weiter gezeigte Dichtelemente, z.B. Schaumgummiringe, angeordnet sein, die eine Abdichtung gegen ein Eindringen von Schmutz, z.B. Staub, od.dgl. gewährleisten. Die Dichtelemente werden bei der Montage eingelegt.

Fig. 1 - 4 zeigt die beschriebene Spanneinrichtung in ihrer Spannstellung, in der über die Spannscheibe 21, axial abgestützt an der Spannmutter 17 über die Stützkörper 50, das Werkzeug 15 axial am Flansch 16 festgespannt ist.

Soll das Werkzeug 15 entfernt und gewechselt werden, so wird über geeignete Mittel der Flansch 16 und/oder das Werkzeug 15 drehblockiert, was z.B. durch entsprechende Blockierung der Spindel 10 z.B mittels einer in der Handwerkzeugmaschine integrierten Spindelarretiereinrichtung erfolgen kann. Unter Umständen reicht evtl. auch die Reibung im Getriebe bis hin zum Motor aus, die Spindel 10 zumindest in Grenzen an einer Drehung in Pfeilrichtung 9 zu hindern. Zum Lösen wird dann das Betätigungsglied 28 in Arbeitsrichtung gemäß Pfeil 9 von Hand gedreht, wobei die Radialstifte 35 von den Kugeln 24 abheben und unter Zusammendrücken der Schraubenfedern 38 in Umfangsrichtung in Richtung auf die Längsstifte 36 der relativ dazu nicht drehenden Spannscheibe 21 mit Spannmutter 17 bewegt werden. Bei dieser Bewegung wälzen sich die Kugeln 24 auf den durch die Ringflächen 32 und 51 gebildeten Bahnen ab, wobei die Kugeln 24 ebenfalls in Umfangsrichtung gemäß Pfeil 9 wandern. Sobald die Kugeln 24 bei dieser Bewegung die Aussparungen 33 in der Ringfläche 32 des Betätigungsgliedes 28 erreicht haben, tauchen die Kugeln 24 radial in diese Aussparungen 33 ein. Dadurch werden die Stützkörper 50 von der auf sie in Radialrichtung von außen nach innen wirkenden Stützkraft zumindest in Grenzen entlastet. Die Stützkörper 50 können sich daher mit ihren schrägen Auflageflächen 52, 53 auf den entsprechend schrägen Ringflächen 25 bzw. 26 radial nach außen verschieben. Aufgrund der schrägflächen kann dabei die Spannscheibe 21 axial dem Spanndruck ausweichen, d.h. bei der Betrachtung in Fig. 1 sich axial zumindest geringfügig in Richtung auf die Spannmutter 17 und den Ring 29 verlagern, zumindest so weit, daß eine entsprechende axiale Entspannung erzielt wird. Daraufhin kann die Kompletteinheit, bestehend aus Spannmutter 17 mit Spannscheibe 21 und Betätigungsglied 28, vollends leicht von Hand abgeschraubt werden. Die relative Schwenkbewegung des Betätigungsgliedes 28 zum axialen Entspannen der Spannscheibe 21 wird dadurch begrenzt, daß die Radialstifte 35 dann, wenn die Schraubenfedern 38 ganz zusammengedrückt sein sollten, an den Längsstiften 36 anschlagen. Sobald die axiale Entspannung erfolgt ist und die Kompletteinheit vollends leicht von Hand abgeschraubt werden kann, erfolgt die Rückstellung der Kugeln 24 selbsttätig aufgrund der sich entspannenden Schraubenfedern 38. Durch den Federdruck auf die Radialstifte 35 wird das Betätigungsglied 28 relativ zur Spannmutter 17 mit Spannscheibe 21 wieder in die in Fig. 2 und 3 gezeigte Ausgangsstellung zurückgedreht, wobei durch die Abrollbewegung der Kugeln 24 diese wieder aus den Aussparungen 33 herausbewegt und in die gezeigte Position zurückbewegt werden. Beim Bewegen der Kugeln 24 aus den Aussparungen 33 heraus und so, daß die Kugeln wieder auf der Ringfläche 32 des Betätigungsgliedes 28 abgestützt sind, wird über die Kugeln 24 eine radial von außen nach innen gerichtete Kraft auf die Stützkörper 50 ausgeübt, die jene wieder in die in Fig. 1 - 4 gezeigte Ausgangsstellung zurückdrängt, in der die Spannscheibe 21 wieder die Ausgangsstellung gemäß Fig. 1 einnimmt. In dieser Position ist die Kompletteinheit, bestehend aus Spannmutter 17 mit Spannscheibe 21 und Betätigungsglied 28, bereit zum Festspannen eines neuen, eingesetzten Werkzeuges. Hierzu reicht es aus, diese Kompletteinheit beim Aufschrauben auf den Gewindeabsatz 13 gegensinnig zum Pfeil 9 leicht anzuziehen, und damit das neue Werkzeug 15 leicht festzuziehen, da beim nachfolgenden Einschalten des Motors sich das Werkzeug 15 im Betrieb selbst festzieht.

Das gleiche Prinzip der Spanneinrichtung kann auch beim rückwärtigen, spindelseitigen Flansch 16 verwirklicht werden, wobei dieser Flansch dann durch die Kompletteinheit, bestehend aus Spannmutter mit Spannscheibe und Betätigungsglied, ausgetauscht wird und wobei dann die Spannscheibe rückseitig gegen das Werkzeug angepreßt ist. Ferner kann dieses Prinzip auch an anderer Stelle einer Handwerkzeugmaschine, z.B. in Form einer geteilten Schleifspindel im Getriebe, zum Einsatz kommen.

Die beschriebene Spanneinrichtung ist einfach, kostengünstig und schnell, sicher und leicht zu handhaben. Sie ermöglicht einen schnellen und sicheren Wechsel des Werkzeuges 15, ohne daß man hierzu zusätzliche, besondere Werkzeuge benötigt. Ein weiterer Vorteil liegt darin, daß auch vorhandene Handwerkzeugmaschinen, insbesondere Schleifmaschinen, nachträglich ohne sonstigen Umbau mit dieser Spanneinrichtung ausgerüstet werden können. Hierzu muß lediglich deren herkömmliche Spannmutter ersetzt werden durch das Kompletteil bestehend aus Spannmutter 17 mit Spannscheibe 21 und Betätigungsglied 28. Im übrigen kann die Spannmutter 17 so ausgebildet werden, daß diese nach wie vor erforderlichenfalls auch einen Angriff eines besonderen Werkzeuges, z.B. in Form eines Zweilochmutterdrehers, ermöglicht, so daß darüber die Spannmutter 17 und mithin das gesamte Kompletteil in besonders hartnäckigen Fällen, z.B. im angerosteten Zustand, auch noch in üblicher Weise mittels eines solchen Hilfswerkzeuges gelöst werden kann. Die Spanneinrichtung ist nicht auf eine Schleifscheibe als Werkzeug 15 beschränkt. Vielmehr können in gleicher Weise werkzeuglos auch sonstige Werkzeuge, z.B. Spannscheiben, Bürsten, Gummiteller, Sägeblätter einer Kreissäge od.dgl. gespannt werden.

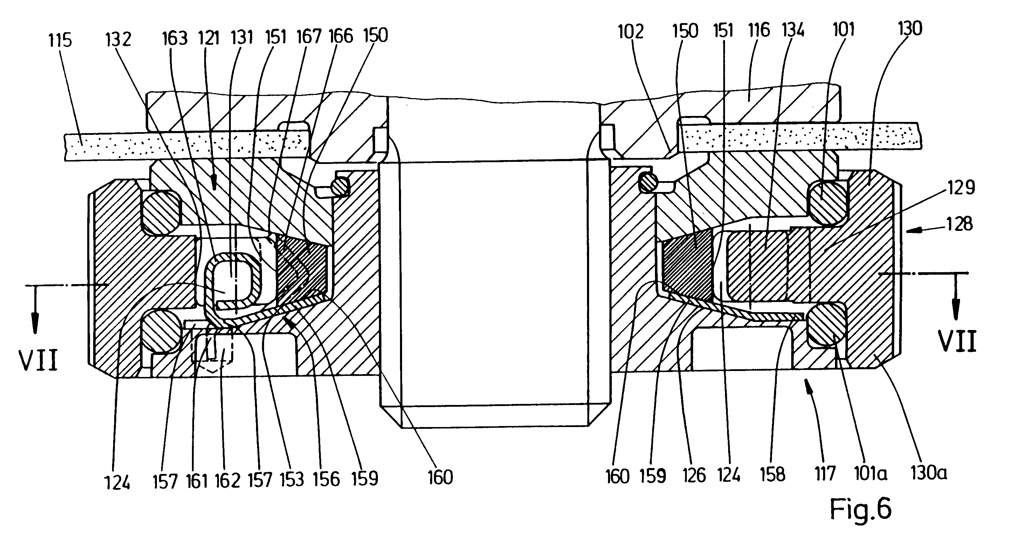

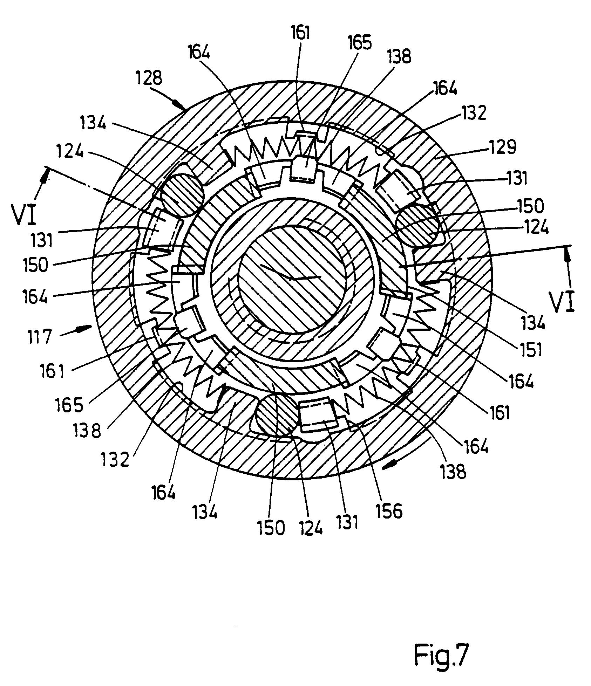

Die nachfolgende Beschreibung zu den Fig. 6 - 10 bezieht sich auf ein Ausführungsgeispiel der Erfindung.

Bei diesem Ausführungsbeispiel sind für die Teile, die der Lösung gemäß den Fig.1 bis 5 entsprechen, um 100 größere Bezugszeichen verwendet, so daß dadurch zur Vermeidung von Wiederholungen auf die Beschreibung zu den Fig.1 bis 5 Bezug genommen ist, wobei dessen vorstehende Offenbarung auch für das Ausführungsbeispiel als erfindungswesentlich offenbart gilt.

Eine Besonderheit des Ausführungsbeispieles im Vergleich zur Lösung gemäß EP A1-345 271 liegt darin, daß der jeweilige etwa diametral gerichtete Mitnehmer 134 des Betätigungsgliedes 128 als mit diesem einstückige Nase ausgebildet ist, die vom Ring 129 radial nach innen in die Bahn der Rollkörper 124 vorspringt. Das Betätigungsglied 128 ist als einstückiges Formteil, z.B. Sinterteil, ausgebildet.

Die Rollkörper 124 sind beim Ausführungsbeispiel nicht als Kugeln, sondern als Zylinderrollen ausgebildet, wobei die Zylinderachse etwa parallel zur Längsmittelachse der Spannmutter 117 ausgerichtet ist.

Das Betätigungsglied 128 weist für die zylindrischen Rollkörper 124 eine nicht vertiefte, zugeordnete zylindrische Bahn 132 auf dem Umfangsbereich zwischen zwei jeweils aufeinanderfolgenden Mitnehmern 134 auf. Die drei Stützkörper 150, die etwa in gleichen Umfangswinkelabständen voneinander angeordnet sind, sind auf ihrer äußeren Umfangsfläche mit einer ebenfalls zylindrischen Bahn 151 versehen, so daß die zylindrischen Rollkörper 124 auf diesen zylindrischen Bahnen 132, 151 abrollen können.

Das Betätigungsglied 128 ist abweichend von der Lösung gemäß Fig 1 bis 5 nicht nur mit einem zylindrischen oberen Ringkragen 130, sondern in axialem Abstand davon mit einem weiteren unteren zylindrischen Ringkragen 130a versehen, die ebenfalls einstückig mit dem Betätigungsglied 128 sind. Vom oberen Ringkragen 130 ist die Spennscheibe 121 und vom unteren Ringkragen 130a die Spannmutter 117 außen zumindest teilweise übergriffen und umgeben. Zwischen den Ringkragen 130, 130a und der Spannscheibe 121 bzw. der Spannmutter 117 ist jeweils ein Dichtungselement 101 bzw. 101a angeordnet, das z.B. aus einem elastischen Dichtungsring besteht. Hierbei handelt es sich z.B. jeweils um einen Gummiring. Die Dichtungselemente 101, 101a dienen der Abdichtung des Innenraumes, der von der Spannmutter 117, der Spannscheibe 121 und dem Betätigungsglied 128 umgrenzt ist. Außerdem halten sie das Betätigungsglied 128 in Position, zumindest axial. Die Spannmutter 117 und die Spannscheibe 121 weisen am Außenrand und auf den einander zugewandten Innenflächen abgesetzte Schultern auf, die dortige stufenförmige Ringaufnahmen für die Dichtungselemente 101, 101a bilden.

Der Flansch 116 ist mit einem axial überstehenden Ringbund 102 versehen, auf dem das Werkzeug 115 in Form der Scheibe radial zentriert ist.

Eine weitere, ebenfalls wesentliche Besonderheit liegt darin, daß zwischen der Spannscheibe 121 und der Spannmutter 117 ein besonderes Einlageteil 156 eingebracht ist, das hier als Blechformteil, z.B. Blechstanzteil, ausgebildet ist. Das Einlageteil 156 besteht aus einem zumindest zum Teil flachen Ring, der mit einem flachen und ebenen Ringabschnitt 157 axial auf einer zugeordneten, dementsprechend ebenen Radialfläche 158 der Spannmutter 117 aufliegt und abgestützt ist.

Bei einem anderen, nicht gezeigten Ausführungsbeispiel ist das Einlageteil 156 statt dessen mit dem flachen Ringabschnitt 157 an einer ebenen Radialfläche auf der in Fig. 6 unteren Seite der Spannscheibe 121 axial abgestützt.

Zumindest auf dem Umfangsbereich, über den sich die Stützkörper 150 erstrecken, weist das Einlageteil 156 Segmente 159, insbesondere Ringsegmente, auf, die auf ihrer Oberseite jeweils eine Stützfläche 160 für die darauf aufliegenden Stützkörper 150 tragen. Die Umfangswinkelerstreckung der einzelnen Segmente 159, insbesondere Ringsegmente, entspricht zumindest annähernd derjenigen jedes Stützkörpers 150. Die Stützfläche 160 ist der in Fig. 6 unteren Auflagefläche 153 der einzelnen Stützkörper 150 zugeordnet. Sie verläuft dementsprechend kegelstumpfförmig. Die Stützfläche 160 verläuft z.B. unter einem Schrägungswinkel etwa von 15°. Die Umfangswinkelerstreckung jedes Segments 159, insbesondere Ringsegments, beträgt z.B. etwa 50° bis 60° Umfangswinkel. Die einzelnen Segmente 159 sind dabei vorzugsweise in gleich großen Umfangswinkelabständen voneinander angeordnet. Das Einlageteil 156 in Form des Blechformteils kann komplett gehärtet sein. Es ist aber ausreichend, wenn zumindest die Stützflächen 160 auf den Segmenten 159, insbesondere Ringsegmenten, gehärtet sind.

Die Segmente 159, insbesondere Ringsegmente, sind als aus der Ebene des flachen, ebenen Ringabschnittes 157 des Blechformteils heraus hochgebogene Blechabschnitte ausgebildet. Diese Blechabschnitte sind zumindest etwa unter dem gleichen Winkel hochgebogen, unter dem die Ringfläche 126 der Spannmutter 117 verläuft, die eine Abstützfläche für diese schrägen Segmente 159 bildet, auf der die betreffenden Blechabschnitte aufliegen und axial abgestützt sind.

Das Einlageteil 156 weist ferner abstehende und beim gezeigten Ausführungsbeispiel zur Spannmutter 117 hin gerichtete Sicherungsteile 161, z.B. Nasen, auf. Die Sicherungsteile 161 greifen in zugeordnete Aufnahmen 162 in Form von Sacklochbohrungen der Spannmutter 117 ein, so daß das Einlageteil 156 darüber in Umfangsrichtung formschlüssig mit der Spannmutter 117 gekoppelt ist. Die Sicherungsteile 161 sind in vorzugsweise gleich großen Umfangswinkelabständen voneinander angeordnet und als Lappen ausgebildet, die aus der Ebene des flachen, ebenen Ringabschnittes 157 des Blechformeteiles heraus etwa rechtwinklig in Fig. 6 nach unten abgebogen sind und dort in die nach oben offene, zugeordnete Aufnahme 162 eingreifen.

Während die Anschläge 31, gemäß den Figuren 1 bis 5, an denen einerseits die Federn 38 und andererseits die Rollkörper 24 anschlagen, als zur Spannscheibe 21 gehörige Stifte ausgebildet sind, sind beim Ausführungsbeispiel diese quer in die Bahn der Rollkörper 124 vorstehenden Anschläge 131 je Rollkörper 124 am Einlageteil 156 ausgebildet. Jeder einem Rollkörper 124 zugeordnete Anschlag 131 ist, ausgehend vom flachen, ebenen Ringabschnitt 157, etwa rechtwinklig davon abgebogen und steht von dieser Ebene in die Bahn der Rollkörper 124 hinein hoch. Dabei ist jeder Anschlag 131 aus einem Blechausschnitt des Blechformteiles gebildet, der zu einem Kasten mit der Querschnittsform etwa eines Viereckes oder z.B. eines Rohres gebogen ist. Beim gezeigten Ausführungsbeispiel hat dieser Anschlag 131 etwa Viereckform. Bei einem anderen, nicht gezeigten Ausführungsbeispiel hat dieser die Querschnittsform z.B. eines Dreiecks, eines sonstigen Vielecks, eines Kreises od. dgl. Dieser Blechausschnitt ist in Fig. 6 - 9 mit 163 bezeichnet. Form und/oder Größe jedes gebogenen Blechausschnittes 163 sind zumindest so groß gewählt, daß daran von einer Seite ein zugeordneter Rollkörper 124 und von der gegenüberliegenden Seite das zugeordnete Ende der Feder 138 Abstützung erfahren.

Auch die gemäß den Figuren 1 bis 5 als Stifte ausgebildeten Positionierglieder 55 sind beim Ausführungsbeispiel vorhanden und dort ebenfalls als Elemente des Einlageteils 156, insbesondere Blechformteils, gebildet. Dort sind die Positionierglieder mit 155 bezeichnet. Sie bestehen aus über die schräge Stützfläche 160 hinaus nach oben hinausragenden Anschlagteilen 164, welche die Stützkörper 150 in Umfangsrichtung in ihrer Lage positionieren. Die Anschlagteile 164 sind als aus dem Blechformteil ausgeschnittene und von den die schräge Stützfläche 160 tragenden, hochgebogenen Segmenten 159 getrennte Laschen ausgebildet, welche über die schräge Stützfläche 160 hinaus hochgebogen sind. Dabei befinden sich die Anschlagteile 164 im Bereich vorhandener Umfangslücken, die zwischen zwei in Umfangsrichtung mit Abstand aufeinander folgenden Segmenten 159 gebildet sind.

Es kann vorteilhaft sein, je Umfangslücke zwischen zwei Segmenten 159 jeweils einen einstückigen, hochgebogenen Anschlagteil 164 vorzusehen. Beim gezeigten Ausführungsbeispiel hingegen sind innerhalb einer Umfangslücke zwei Anschlagteile 164, insbesondere Laschen, angeordnet, die in Umfangsrichtung einen Abstand voneinander haben. Dabei ist ein Anschlagteil 164 dem zugewandten Ende eines Stützkörpers 150 und der andere Anschlagteil 164 dem zugewandten Ende des nächstfolgenden Stützkörpers 150 als Positionierglied zugeordnet. Im Lückenbereich zwischen jeweils zwei Anschlagteilen 164 ist ein zungenförmiger Blechausschnitt 165 gebildet, der im Zwischenraumbereich zwischen zwei Stützkörpern 150 hochragt. Dieser hochragende Blechausschnitt 165 ist etwa an gleicher Umfangsstelle angeordnet wie jeweils ein Sicherungsteil 161. Dabei ist letzterer auf der Ringaußenseite des Einlageteils 156 und der hochragende Blechausschnitt 165 auf der Ringinnenseite angeordnet.

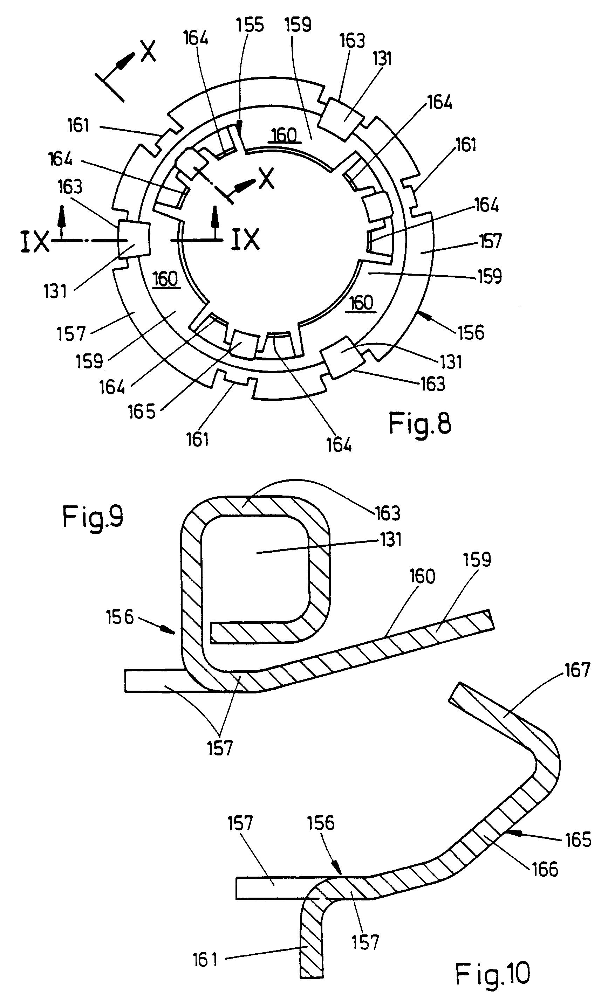

Einzelheiten des etwa zungenförmigen, hochgebogenen Blechausschnitts 165 ersieht man insbesondere aus Fig. 10. Der Blechausschnitt 165 weist einen über das Niveau der schrägen Stützfläche 160 hinaus hochgebogenen; schrägen Laschenabschnitt 166 auf, der radial nach innen gerichtet ist. An diesen Laschenabschnitt 166 schließt sich ein diesem gegenüber umgebogener und radial nach außen gerichteter Endabschnitt 167 an. Beide bilden im Querschnitt etwa ein liegendes V, dessen Öffnung radial nach außen weist. Dieser etwa zungenförmige, hochragende Blechausschnitt 165 bildet eine Sicherungseinrichtung für die Feder 138 bei der Montage der Spanneinrichtung. Die Feder 138 wird ja bei der Montage mit gewisser Vorspannung zwischen dem Mitnehmer 134 einerseits und dem Anschlag 131 in Form des gebogenen Blechausschnitts 163 andererseits montiert. Dabei neigt die Feder 138 je nach Vorspannung dazu, sich nach oben auszuwölben und wegzuspringen. Dem wird durch den die Feder 138 zumindest geringfügig übergreifenden Blechausschnitt 165 entgegengewirkt.

Der jeweilige Sicherungsteil 161, insbesondere die Nase, und jeder Anschlag 131, gebildet durch den gebogenen, im Querschnitt etwa kastenförmigen Blechausschnitt 163, ist auf der Ringaußenseite des Einlageteils 156 in Form des Blechformteils angeordnet. Dagegen sind die Anschlagteile 164 und der hochragende etwa zungenförmige Blechausschnitt 165 jeweils auf der Ringinnenseite angeordnet.

Jedes die schräge Stützfläche 160 tragende Segment 159 in Gestalt des entsprechenden hochgebogenen Blechabschnittes und/oder jeder einen Anschlag 131 bildende, gebogene Blechausschnitt 163 und/oder jeder Sicherungsteil 161 und/oder jeder ein Positionierglied bildende Anschlagteil 164 und/oder jeder hochragende, etwa zungenförmige Blechausschnitt 165 könnte aus dem Blechformteil tiefgezogen sein, wodurch die Festigkeit des Einlageteils 156 und der einzelnen Elemente erhöht wird.

Dadurch, daß alle beschriebenen Elemente Teil des Einlageteils 156 sind, der etwa wie ein Käfig beschaffen ist, ist eine Vereinfachung und Kostenreduzierung erreicht. Die Spannscheibe 121 und die Spannmutter 117 lassen sich so besonders kostengünstig und einfach fertigen. Der Teil, der beim ersten Ausführungsbeispiel die Anschläge 31 und/oder Positionierglieder 55 trägt, kann somit wesentlich einfacher und kostengünstiger hergestellt werden, z.B. als einfaches Drehteil. Dabei handelt es sich also um die Spannmutter 117 und die Spannscheibe 121 . Dadurch, daß zumindest der Teil des Einlageteils gehärtet ist, der die Stützflächen 160 für die Stützkörper 150 trägt, wird eine weitere Vereinfachung und Verbilligung erzielt.

Eine weitere, ebenfalls erfindungswesentliche Gestaltung ist beim Ausführungsbeispiel mit dargestellt. Danach ist das Einlageteil 156 in Form des Blechformteils als eine axiale Federkraft, die zwischen der Spannmutter 117 und der Spannscheibe 121 wirksam ist und diese auseinanderdrückt, ausübendes Federelement ausgebildet. Das Einlageteil 156, insbesondere Blechformteil, ist hierzu mit abgebogenen Federzungen versehen, die axial an der Spannscheibe 121 und/oder Spannmutter 117 vorzugsweise mit Vorspannung anliegen.

In besonders vorteilhafter Weise sind diese Federzungen z.B. durch die nach oben hinausragenden, als Positionierglieder 155 ausgebildeten Anschlagteile 164 und/oder durch die hochragenden, etwa zungenförmigen Blechausschnitte 165, insbesondere deren Laschenabschnitt 166 und daran anschliessenden Endabschnitt 167, gebildet. Auf diese Weise erfüllen diese Teile zugleich als zweite Funktion diejenige des axialen Federelementes. Dabei können die die Federzungen bildenden Teile 164, 165 so weit abgebogen und hochgebogen sein, daß diese bei der gezeigten Anordnung des Einlageteils 156 federnd gegen die Spannscheibe 121 drücken. Dies ist schematisch in Fig. 6 links für den Laschenabschnitt 166 gestrichelt angedeutet, dessen Endabschnitt 167 so hochgebogen ist, daß er mit seinem in Fig. 6 oberen Ende an der Spannscheibe 121 anliegt. Die besagten Federzungen können so eingestellt werden, daß die erforderliche Federkraft, vorzugsweise etwa in der Größenordnung von 150 bis 300 N, erreicht ist, mit der die Spannmutter 117 und die Spannscheibe 121 axial federnd auseinandergehalten werden. Um den erforderlichen Federweg, z.B. in der Größenordnung von ca. 0,5 mm, zu erreichen, ist die Spanneinrichtung so gestaltet, daß beim Spannen der Spanneinrichtung der entsprechende Weg vorgeschaltet wird. Aufgrund der Ausbildung des Einlageteils 156, insbesondere Blechformteils, zugleich als Feder wird die Sicherheit gegen selbsttätiges Lösen der Spanneinrichtung mit einfachen Mitteln erheblich verbessert. Einer etwaigen Gefahr, daß sich z.B. die Spannmutter 117 u.U. bei stärkeren Vibrationen lösen kann, ist zuverlässig entgegengewirkt.

Die Handhabung und Wirkungsweise der Spanneinrichtung gemäß dem in Fig. 6 - 10 gezeigten Ausführungsbeispiel ist im übrigen analog derjenigen gemäß Fig. 1 - 5.

## Patentansprüche

1. Spanneinrichtung zum axialen Festspannen eines scheibenförmigen Werkzeuges (115), insbesondere einer Schleifscheibe, an einem Flansch (116) einer angetriebenen Spindel, mit einer auf einem endseitigen Gewindeabsatz der Spindel aufschraubbaren Spannmutter (117) und einer axial zwischen dem Werkzeug (115) und der Spannmutter (117) angeordneten und an der Spannmutter (117) abgestützten Spannscheibe (121), die gegen das Werkzeug (115) drücken und; dieses gegen den Flansch (116) anpressen kann, dadurch gekennzeichnet, daß die Spannscheibe (121) mit der Spannmutter (117) axial verschiebbar, jedoch undrehbar gekoppelt ist und mittels zwischen Stützflächen (125, 126) der Spannscheibe (121) und Spannmutter (117) gehaltener Stützkörper (150) axial abgestützt ist, daß zwischen der Spannscheibe (121) und der Spannmutter (117) ein Betätigungsglied (128) angeordnet ist, daß die Stützkörper (150) mittels auf Bahnen (151, 132) dieser und des Betätigungsgliedes (128) geführter und abrollender Rollkörper (124) radial beaufschlagt sind, daß das Betätigungsglied (128) die Rollkörper (124) in der der Festspannrichtung entsprechenden einen Richtung gegen Anschläge (131) der Spannscheibe (121) drückt und gegensinnig dazu längs der Bahnen (151, 132) bis in darin einmündende, jeweils zugeordnete radiale Aussparungen (133) unter radialer Entlastung der Stützkörper (150) und axialer Entlastung der Spannscheibe (121) vom Spanndruck bewegen kann und daß der quer in die Bahn der Rollkörper (124) vorstehende Anschlag (131) je Rollkörper (24, 124) an einem eigenständigen Einlageteil (156) vorgesehen ist.

2. Spanneinrichtung nach Anspruch 1, **dadurch gekennzeichnet,** daß das Einlageteil (156) als Blechformteil, z.B. Blechstanzteil, ausgebildet ist.

3. Spanneinrichtung nach Anspruch 1 oder 2, **dadurch gekennzeichnet,** daß das Einlageteil (156) aus einem zumindest zum Teil flachen Ring besteht, der mit einem flachen und ebenen Ringabschnitt (157) axial auf einer zugeordneten, dementsprechend ebenen Radialfläche (158) der Spannmutter (117) oder der Spannscheibe (121) aufliegt und abgestützt ist.

4. Spanneinrichtung nach einem der Ansprüche 1 - 3, **dadurch gekennzeichnet,** daß das Einlageteil (156) abstehende und zur Spannmutter (117) oder Spannscheibe (121) hin gerichtete Sicherungsteile (161), z.B. Nasen, aufweist, die in zugeordnete Aufnahmen (162), z.B. Bohrungen, der Spannmutter (117) bzw. Spannscheibe (121) unter formschlüssiger Kopplung des Einlageteils (156) in Umfangsrichtung mit dieser eingreifen.

5. Spanneinrichtung nach Anspruch 4, **dadurch gekennzeichnet,** daß die Sicherungsteile (161) in vorzugsweise gleich großen Umfangswinkelabständen voneinander angeordnet sind.

6. Spanneinrichtung nach Anspruch 4 oder 5, **dadurch gekennzeichnet,** daß die Sicherungsteile (161) als aus der Ebene des flachen und ebenen Ringabschnittes (157) des Blechformteiles heraus etwa rechtwinklig abgebogene Lappen ausgebildet sind.

7. Spanneinrichtung nach einem der Ansprüche 1 - 6, **dadurch gekennzeichnet,** daß das Einlageteil (156) zumindest auf dem Umfangsbereich, über den sich die Stützkörper (150) erstrecken, die der Stützkörperauflagefläche (153) zugeordnete und dementsprechend kegelstumpfförmig verlaufende, spannmutterseitige oder spannscheibenseitige Stützfläche (160) trägt.

8. Spanneinrichtung nach Anspruch 7, **dadurch gekennzeichnet,** daß das Einlageteil (156) die jeweilige Stützfläche (160) auf ihrer Oberseite tragende Segmente (159), insbesondere Ringsegmente, aufweist, deren Umfangswinkelerstreckung zumindest annähernd derjenigen eines jeden Stützkörpers (150) entspricht.

9. Spanneinrichtung nach einem der Ansprüche 2 - 8, **dadurch gekennzeichnet,** daß die Segmente (159), insbesondere Ringsegmente, als aus der Ebene des flachen und ebenen Ringabschnittes (157) des Blechformteiles heraus abgebogene Blechabschnitte ausgebildet sind.

10. Spanneinrichtung nach Anspruch 9, **dadurch gekennzeichnet,** daß die Blechabschnitte zumindest etwa unter dem gleichen Winkel abgebogen sind, unter dem eine Abstützfläche (126) der Spannmutter (117) oder der Spannscheibe (121) verläuft, auf der die Blechabschnitte aufliegen und axial abgestützt sind.

11. Spanneinrichtung nach Anspruch 9 oder 10, **dadurch gekennzeichnet,** daß die Stützfläche (160) des Einlageteils (156) unter einem Schrägungswinkel von etwa 15° verläuft.

12. Spanneinrichtung nach einem der Ansprüche 7 - 11, **dadurch gekennzeichnet,** daß die jeweilige Stützfläche (160), insbesondere das diese jeweils tragende jeweilige Segment (159), sich jeweils über etwa 50° bis 60° Umfangswinkel erstreckt.

13. Spanneinrichtung nach einem der Ansprüche 8 - 12, **dadurch gekennzeichnet,** daß die Segmente (159), insbesondere Ringsegmente, in vorzugsweise gleich großen Umfangswinkelabständen voneinander angeordnet sind.

14. Spanneinrichtung nach einem der Ansprüche 2 - 13, **dadurch gekennzeichnet,** daß das Blechformteil, zumindest dessen Stützfläche (160) an den Segmenten (159), insbesondere Ringsegmenten, gehärtet ist.

15. Spanneinrichtung nach einem der Ansprüche 1 - 14, **dadurch gekennzeichnet,** daß jeder einem Rollkörper (124) zugeordnete Anschlag (131) - ausgehend vom flachen, ebenen Ringabschnitt (157) - etwa rechtwinklig abgebogen ist und von dieser Ebene in die Bahn der Rollkörper (124) hinein absteht.

16. Spanneinrichtung nach Anspruch 15, **dadurch gekennzeichnet,** daß der Anschlag (131) aus einem zu einem Kasten, Rohr od. dgl. mit der Querschnittsform eines Dreiecks, Vierecks, Vielecks, eines Kreises od. dgl. gebogenen Blechausschnitt (163) des Blechformteiles gebildet ist.

17. Spanneinrichtung nach Anspruch 16, **dadurch gekennzeichnet,** daß Form und/oder Größe des gebogenen Blechausschnittes (163) zumindest so groß gewählt sind, daß daran von einer Seite ein zugeordneter Rollkörper (124) und von der gegenüberliegenden Seite das zugeordnete Ende der Feder (138) Abstützung erfährt.

18. Spanneinrichtung nach einem der Ansprüche 1 - 17, **dadurch gekennzeichnet,** daß das Einlageteil (156) jeweils in den Umfangslücken, die zwischen zwei in Umfangsrichtung mit Abstand aufeinanderfolgenden, auf ihrer Oberseite die jeweilige Stützfläche (160) tragenden Segmenten (159), insbesondere Ringsementen, gebildet sind, ein oder mehrere, über die schräge Stützfläche (160) weiter hinausragende Anschlagteile (164) aufweist, die die Stützkörper (150) in Umfangsrichtung in ihrer Lage positionieren.

19. Spanneinrichtung nach Anspruch 18, **dadurch gekennzeichnet,** daß die Anschlagteile (164) als aus dem Blechformteil ausgeschnittene und von den die schräge Stützfläche (160) tragenden, abgebogenen Blechabschnitten getrennte Laschen ausgebildet sind, die über die schräge Stützfläche (160) hinaus hochgebogen sind.

20. Spanneinrichtung nach Anspruch 18 oder 19, **dadurch gekennzeichnet,** daß innerhalb einer Umfangslücke zwei Anschlagteile (164), insbesondere Laschen, angeordnet sind, die in Umfangsrichtung einen Abstand voneinander haben, wobei ein Anschlagteil (164), insbesondere eine Lasche, dem zugewandten Ende eines Stützkörpers (150) und der andere Anschlagteil (164), insbesondere die andere Lasche, dem zugewandten Ende des nächstfolgenden Stützkörpers (150) als Positionierglied (155) zugeordnet ist.

21. Spanneinrichtung nach Anspruch 20, **dadurch gekennzeichnet,** daß im Lückenbereich zwischen jeweils zwei Anschlagteilen (164), insbesondere Laschen, ein zungenförmiger Blechausschnitt (165) des Blechformteiles gebildet ist, der im Zwischenraumbereich zwischen zwei Stützkörpern (150) hochragt.

22. Spanneinrichtung nach Anspruch 21, **dadurch gekennzeichnet,** daß jeder hochragende Blechausschnitt (165) etwa an gleicher Umfangsstelle des Blechformteiles angeordnet ist wie jeweils ein Sicherungsteil (161), insbesondere eine Nase.

23. Spanneinrichtung nach Anspruch 21 oder 22, **dadurch gekennzeichnet,** daß jeder hochragende Blechausschnitt (165) auf der Ringinnenseite des Blechformteiles angeordnet ist.

24. Spanneinrichtung nach einem der Ansprüche 1 - 23, **dadurch gekennzeichnet,** daß jeder Sicherungsteil (161), insbesondere jede Nase, und/oder jeder einen Anschlag (131) bildende, gebogene Blechausschnitt (163) auf der Ringaußenseite des Blechformteiles angeordnet ist.

25. Spanneinrichtung nach einem der Ansprüche 21 - 24, **dadurch gekennzeichnet,** daß der zungenförmige, hochragende Blechausschnitt (165) einen über das Niveau der schrägen Stützfläche (160) hinaus hochgebogenen, schrägen Laschenabschnitt (166) aufweist, der vorzugsweise radial nach innen gerichtet ist.

26. Spanneinrichtung nach Anspruch 25, **dadurch gekennzeichnet,** daß sich an den schrägen Laschenabschnitt (166) ein diesem gegenüber umgebogener und radial nach außen gerichteter Endabschnitt (167) anschließt.

27. Spanneinrichtung nach Anspruch 26, **dadurch gekennzeichnet,** daß der hochgebogene, schräge Laschenabschnitt (166) und der daran anschliessende Endabschnitt (167) im Querschnitt etwa ein liegendes V bilden, dessen Öffnung radial nach außen weist.

28. Spanneinrichtung nach einem der Ansprüche 21 - 27, **dadurch gekennzeichnet,** daß der zungenförmige, hochragende Blechausschnitt (165), insbesondere der Laschenabschnitt (166) und Endabschnitt (167), eine Sicherungseinrichtung für die Feder (138), zumindest bei der Montage, bildet.

29. Spanneinrichtung nach einem der Ansprüche 1 - 28, **dadurch gekennzeichnet,** daß jeder die schräge Stützfläche (160) tragende, hochgebogene Blechabschnitt (159) und/oder jeder jeweils einen Anschlag (131) bildende, gebogene Blechausschnitt (163) und/oder jeder Sicherungsteil (161), insbesondere jede Nase, und/oder jeder ein Positionierglied (155) bildende Anschlagteil (164), insbesondere jede Lasche, und/oder jeder hochragende,zungenförmige Blechausschnitt (165) aus dem Blechformteil tiefgezogen sind.

30. Spanneinrichtung zum axialen Festspannen eines scheibenförmigen Werkzeuges (115), insbesondere einer Schleifscheibe, an einem Flansch (116) einer angetriebenen Spindel, mit einer auf einem endseitigen Gewindeabsatz der Spindel aufschraubbaren Spannmutter (117) und einer axial zwischen dem Werkzeug (115) und der Spannmutter (117) angeordneten und an der Spannmutter (117) abgestützten Spannscheibe (121), die gegen das Werkzeug (115) drücken und dieses gegen den Flansch (116) anpressen kann, dadurch gekennzeichnet daß die Spannscheibe (121) mit der Spannmutter (117) axial verschiebbar, jedoch undrehbar gekoppelt ist und mittels zwischen Stützflächen (125, 126) der Spannscheibe (121) und Spannmutter (117) gehaltener Stützkörper (150) axial abgestützt ist, daß zwischen der Spannscheibe (121) und der Spannmutter (117) ein Betätigungsglied (128) angeordnet ist, daß die Stützkörper (150) mittels auf Bahnen (151, 132) dieser und des Betätigungsgliedes (128) geführter und abrollender Rollkörper (124) radial beaufschlagt sind, daß das Betätigungsglied (128) die Rollkörper (124) in der der Festspannrichtung entsprechenden einen Richtung gegen Anschläge (131) der Spannscheibe (121) drückt und gegensinnig dazu längs der Bahnen (151, 132) bis in darin einmündende, jeweils zugeordnete radiale Aussparungen (133) unter radialer Entlastung der Stützkörper (150) und axialer Entlastung der Spannscheibe (121) vom Spanndruck bewegen kann und daß ein als Blechformteil ausgebildetes Einlageteil (156) als eine axiale Federkraft, die zwischen der Spannmutter (117) und der Spannscheibe (121) wirksam ist und beide auseinanderrückt, ausübendes Federelement ausgebildet ist.

31. Spanneinrichtung nach Anspruch 30, **gekennzeichnet durch** abgebogene Federzungen des Blechformteiles, die axial an der Spannscheibe (121) und/oder Spannmutter (117), vorzugsweise mit Vorspannung, anliegen.

32. Spanneinrichtung nach einem der Ansprüche 18 - 31, **dadurch gekennzeichnet,** daß Federzungen durch die nach oben hinausragenden, als Positionierglieder (155) ausgebildeten Anschlagteiie (164), insbesondere Laschen, und/oder durch (die) hochragenden, zungenförmigen Blechausschnitte (165), insbesondere deren Laschenabschnitt (166) und daran anschließenden Endabschnitt (167), gebildet sind.

33. Spanneinrichtung nach Anspruch 32, **dadurch gekennzeichnet,** daß die die Federzungen bildenden Teile so weit abgebogen und hochgebogen sind, daß diese federnd gegen die Spannscheibe (121) und/oder Spannmutter (117) drücken.

34. Spanneinrichtung nach einem der Ansprüche 1 - 33, **dadurch gekennzeichnet,** daß der jeweilige Mitnehmer (134) des Betätigungsgliedes (128) als mit diesem einstückige, radial nach innen vorspringende Nase ausgebildet ist.

35. Spanneinrichtung nach Anspruch 34, **dadurch gekennzeichnet,** daß das Betätigungsglied (128) als einstückiges Formteil, insbesondere Sinterteil, ausgebildet ist.

36. Spanneinrichtung nach einem der Ansprüche 1 - 35, **dadurch gekennzeichnet,** daß die Rollkörper (124) als Zylinderrollen ausgebildet sind, die jeweils auf zugeordneten zylindrischen Bahnen (132, 151) abrollen.

37. Spanneinrichtung nach einem der Ansprüche 1 - 36, **dadurch gekennzeichnet,** daß das Betätigungsglied (128), insbesondere der Ring (129), mit einem etwa zylindrischen Ringkragen (130) die Spannscheibe (121) und mit einem anderen, etwa zylindrischen Ringkragen (130a) die Spannmutter (117) außen zumindest teilweise übergreift und umgibt.

38. Spanneinrichtung nach Anspruch 37, **dadurch gekennzeichnet,** daß zwischen jedem Ringkragen (130, 130a) und der Spannscheibe (121) bzw. Spannmutter (117) ein Dichtungselement (101, 101a) , insbesondere ein elastischer Dichtungsring, angeordnet ist.

## Claims

1. Clamping device for the axial clamping of a disc-shaped tool (115), in particular a grinding disc, on a flange (116) of a driven spindle, having a clamping nut (117) which can be screwed onto a threaded end shank of the spindle and a clamping disc (121) which is arranged axially between the tool (115) and the clamping nut (117), is supported on the clamping nut (117) and can press against the tool (115) and can press the latter against the flange (116), characterized in that the clamping disc (121) is coupled to the clamping nut (117) axially displaceably, but non-rotatably and is supported axially by means of a supporting body (150) held between supporting surfaces (125, 126) of the clamping disc (121) and clamping nut (117), in that arranged between the clamping disc (121) and the clamping nut (117) is an actuating member (128), in that the latter supporting bodies (150) are stressed radially by means of rolling bodies (124) which are guided and roll on paths (151, 132) of the latter and of the actuating member (128), in that the actuating member (128) presses the rolling bodies (124) against stops (131) of the clamping disc (121) in the direction corresponding to the clamping direction and in the opposite direction thereto, with radial relief of the supporting bodies (150) and axial relief of the clamping disc (121) from the clamping pressure, can move along the paths (151, 132) into clearances (133) which open therein and are in each case associated therewith, and in that the stop (131) projecting transversely into the path of the rolling bodies (124) is provided, for each rolling body (24, 124) (sic), on an independent insert part (156).

2. Clamping device according to Claim 1, characterized in that the insert part (156) is designed as a sheet-metal formed part, for example a sheet-metal stamped part.

3. Clamping device according to Claim 1 or 2, characterized in that the insert part (156) consists of an at least partially flat ring which rests and is supported axially by means of a flat and plane annular portion (157) on an associated correspondingly plane radial surface (158) of the clamping nut (117) or of the clamping disc (121).

4. Clamping device according to one of Claims 1 - 3, characterized in that the insert part (156) has projecting retention parts (161), for example noses, which are directed towards the clamping nut (117) or clamping disc (121) and which engage into associated receptacles (162), for example bores, of the clamping nut (117) or of the clamping disc (121), the insert part (156) thereby being coupled positively to this in the circumferential direction.

5. Clamping device according to Claim 4, characterized in that the retention parts (161) are preferably arranged at equal circumferential angular distances from one another.

6. Clamping device according to Claim 4 or 5, characterized in that the retention parts (161) are designed as tabs bent approximately at right angles out of the plane of the flat and plane annular portion (157) of the sheet-metal formed part.

7. Clamping device according to one of Claims 1 - 6, characterized in that the insert part (156) carries, at least in the circumferential region over which the supporting bodies (150) extend, the supporting surface (160) which is assigned to the supporting-body bearing surface (153) and extends correspondingly frustoconically and which is located on the clamping-nut side or on the clamping-disc side.

8. Clamping device according to Claim 7, characterized in that the insert part (156) has segments (159), especially ring segments, which carry the respective supporting surface (160) on their top side and the angular circumferential extent of which corresponds at least approximately to that of each supporting body (150).

9. Clamping device according to one of Claims 2 - 8, characterized in that the segments (159), especially ring segments, are designed as sheet-metal portions bent out of the plane out of the flat and plane annular portion (157) of the sheet-metal formed part.

10. Clamping device according to Claim 9, characterized in that the sheet-metal portions are bent at least approximately at the same angle at which extends a supporting surface (126) of the clamping nut (117) or of the clamping disc (121), on which the sheet-metal portions rest and are supported axially.

11. Clamping device according to Claim 9 or 10, characterized in that the supporting surface (160) of the insert part (156) extends at an angle of inclination of approximately 15°.

12. Clamping device according to one of Claims 7 - 11, characterized in that the respective supporting surface (160), especially the respective segment (159) carrying this, extends respectively over a circumferential angle of approximately 50° to 60°.

13. Clamping device according to one of Claims 8 - 12, characterized in that the segments (159), especially ring segments, are arranged at preferably equal circumferential angular distances from one another.

14. Clamping device according to one of Claims 2 - 13, characterized in that the sheet-metal formed part, at least its supporting surface (160) on the segments (159), especially ring segments, is hardened.

15. Clamping device according to one of Claims 1 - 14, characterized in that each stop (131) assigned to a rolling body (124), starting from the flat plane annular portion (157), is bent approximately at right angles and projects from this plane into the path of the rolling bodies (124).

16. Clamping device according to Claim 15, characterized in that the stop (131) is formed from a sheet-metal cutout (163), bent to form a box, tube or the like with the cross-sectional form of a triangle, square, polygon, circle or the like, of the sheet-metal formed part.

17. Clamping device according to Claim 16, characterized in that the shape and/or size of the bent sheet-metal cutout (163) are selected at least large enough to ensure that an associated rolling body (124) is supported on it from one side and the associated end of the spring (138) supported from the opposite side.

18. Clamping device according to one of Claims 1 - 17, characterized in that the insert part (156), in the respective circumferential gaps formed between two segments (159), especially ring segments, succeeding one another at a distance in the circumferential direction and on their top side carrying the respective supporting surface (160), possesses one or more stop parts (164) which project further beyond the oblique supporting surface (160) and which put the supporting bodies (150) in their position in the circumferential direction.

19. Clamping device according to Claim 16, characterized in that the stop parts (164) are designed as tongues which are cut out from the sheet-metal formed part and are separated from the bent sheet-metal portions carrying the oblique supporting surface (160) and which are bent upwards beyond the oblique supporting surface (160).

20. Clamping device according to Claim 18 or 19, characterized in that two stop parts (164), especially tongues, at a distance from one another in the circumferential direction, are arranged within a circumferential gap, one stop part (164), especially one tongue, being assigned as a positioning member (155) to the confronting end of one supporting body (150), and the other stop part (164), especially the other tongue, to the confronting end of the next following supporting body (150).

21. Clamping device according to Claim 20, characterized in that a toe-shaped sheet-metal cutout (165) of the sheet-metal formed part is formed in the gap region between two respective stop parts (164), especially tongues, and projects upwards in the interspatial region between two supporting bodies (150).

22. Clamping device according to Claim 21, characterized in that each upwardly projecting sheet-metal cutout (165) is arranged at approximately the same circumferential location of the sheet-metal formed part as a respective retention part (161), especially a nose.

23. Clamping device according to Claim 21 or 22, characterized in that each upwardly projecting sheet-metal cutout (165) is arranged on the ring inside of the sheet-metal formed part.

24. Clamping device according to one of Claims 1 - 23, characterized in that each retention part (161), especially each nose, and/or each bent sheet-metal cutout (163) forming a stop (131) is arranged on the ring outside of the sheet-metal formed part.

25. Clamping device according to one of Claims 21 - 24, characterized in that the toe-shaped upwardly projecting sheet-metal cutout (165) has an oblique tongue portion (166) which is bent upwards beyond the level of the oblique supporting surface (160) and which is preferably directed radially inwards.

26. Clamping device according to Claim 25, characterized in that there adjoins the oblique tongue portion (166) an end portion (167) which is bent round relative to this and which is directed radially outwards.

27. Clamping device according to Claim 26, characterized in that the upwardly bent oblique tongue portion (166) and the adjoining end portion (167), in cross-section, form approximately a horizontal V, the aperture of which points radially outwards.

28. Clamping device according to one of Claims 21 - 27, characterized in that the toe-shaped upwardly projecting sheet-metal cutout (165), especially the tongue portion (166) and end portion (167), forms a retention device for the spring (138), at least during assembly.

29. Clamping device according to one of Claims 1 - 28, characterized in that each upwardly bent sheet-metal portion (159) carrying the oblique supporting surface (160) and/or each bent sheet-metal cutout (163) forming a respective stop (131) and/or each retention part (161), especially each nose, and/or each stop part (164), especially each tongue, forming a positioning member (155) and/or each upwardly projecting toe-shaped sheet-metal cutout (165) are deep-drawn from the sheet-metal formed part.

30. Clamping device for the axial clamping of a disc-shaped tool (115), in particular a grinding disc, on a flange (116) of a driven spindle, having a clamping nut (117) which can be screwed onto a threaded end shank of the spindle and a clamping disc (121) which is arranged axially between the tool (115) and the clamping nut (117), is supported on the clamping nut (117) and can press against the tool (115) and can press the latter against the flange (116), characterized in that the clamping disc (121) is coupled to the clamping nut (117) axially displaceably, but non-rotatably and is supported axially by means of supporting bodies (150) held between supporting surfaces (125, 126) of the clamping disc (121) and clamping nut (117), in that arranged between the clamping disc (121) and the clamping nut (117) is an actuating member (128), in that the supporting bodies (150) are stressed radially by means of rolling bodies (124) guided and rolling on paths (151, 132) of the latter and of the actuating member (128), in that the actuating member (128) presses the rolling bodies (124) againt stops (131) of the clamping disc (121) in the direction corresponding to the clamping direction and in the opposite direction thereto, with radial relief of the supporting bodies (150) and axial relief of the clamping disc (121) from the clamping pressure, can move along the paths (151, 132) into clearances (133) opening therein and in each case associated therewith, and in that an insert part (156), designed as a sheet-metal formed part, is designed as a spring element exerting an axial spring force which is effective between the clamping nut (117) and the clamping disc (121) and presses them apart from one another.

31. Clamping device according to Claim 30, characterized by bent spring tongues of the sheet-metal formed part which rest preferably with prestress axially against the clamping disc (121) and/or clamping nut (117).

32. Clamping device according to one of Claims 18 - 31, characterized in that spring tongues are formed by the upwardly projecting stop parts (164), especially tongues, designed as positioning members (155) and/or by the upwardly projecting toe-shaped sheet-metal cutouts (165), especially their tongue portion (166) and adjoining end portion (167).

33. Clamping device according to Claim 32, characterized in that the parts forming the spring tongues are bent and bent upwards so far that they press resiliently against the clamping disc (121) and/or clamping nut (117).

34. Clamping device according to one of Claims 1 - 33, characterized in that the respective driver (134) of the actuating member (128) is designed as a nose in one piece with this and projecting radially inwards.

35. Clamping device according to Claim 34, characterized in that the actuating member (128) is designed as an integral formed part, especially a sintered part.

36. Clamping device according to one of Claims 1 - 35, characterized in that the rolling bodies (124) are designed as cylindrical rollers which roll respectively on associated cylindrical paths (132, 151).

37. Clamping device according to one of Claims 1 - 36, characterized in that the actuating member (128), especially the ring (129), at least partially engages over and surrounds on the outside the clamping disc (121) by means of an approximately cylindrical annular collar (130) and the clamping nut (117) by means of another approximately cylindrical annular collar (130a).

38. Clamping device according to Claim 37, characterized in that a sealing element (101, 101a), especially an elastic sealing ring, is arranged respectively between each annular collar (130, 130a) and the clamping disc (121) and clamping nut (117).

## Revendications

1. Dispositif de serrage pour le blocage axial d'un outil (115) en forme de disque, en particulier d'un disque de meulage, sur une bride (116) d'une broche entraînée, avec un écrou de serrage (117) pouvant être vissé sur un appendice fileté terminal de la broche et avec un disque de serrage (121) disposé axialement entre l'outil (115) et l'écrou de serrage (117) et s'appuyant sur l'écrou de serrage (117), disque de serrage qui peut s'appuyer contre l'outil (115) et presser celui-ci contre la bride (116), dispositif de serrage caractérisé en ce que le disque de serrage (121) est couplé à l'écrou de serrage (117) de façon à pouvoir coulisser, mais toutefois sans pouvoir tourner et s'appuie axialement au moyen de corps d'appui (150) maintenus entre des surfaces d'appui (125, 126) du disque de serrage (121) et de l'écrou de serrage (117), en ce qu'entre le disque de serrage (121) et l'écrou de serrage (117) on dispose un organe d'actionnement (128), en ce que les corps d'appui (150) sont sollicités radialement au moyen de corps de roulement (124) guidés et roulant sur des pistes (151, 132) de ceux-ci et de l'organe d'actionnement (128), en ce que l'organe d'actionnement (128) presse les corps de roulement (124) dans l'une des directions correspondant au sens de blocage contre des butées (131) du disque de serrage (121) et peut tourner en sens contraire le long des pistes (151, 132) jusque dans des évidements (133) débouchant dans celles-ci respectivement associés radialement, les corps d'appui (150) étant radialement déchargés et le disque de serrage, (121) étant axialement déchargé de la pression de serrage et en ce que la butée (131) faisant saillie en travers de la piste des corps de roulement (124) est prévue pour chaque corps de roulement (124) sur une pièce rapportée (156) autonome.

2. Dispositif de serrage selon la revendication 1, caractérisé en ce que la pièce rapportée (156) est constituée sous la forme d'une pièce usinée en tôle, par exemple une pièce estampée en tôle.

3. Dispositif de serrage selon la revendication 1 ou 2, caractérisé en ce que la pièce rapportée (156) consiste en une bague plate au moins en partie qui repose et s'appuie axialement par une section annulaire plate et plane (157) axialement sur une surface radiale correspondante, plane en conséquence, (158) de l'écrou de serrage (117) ou du disque de serrage (121).

4. Dispositif de serrage selon l'une des revendications 1 à 3, caractérisé en ce que la pièce rapportée (156) présente des pièces de verrouillage (161) telles que par exemple des nez en saillie, orientées en direction de l'écrou de serrage (117) ou du disque de serrage (121), qui viennent en prise avec celui-ci dans des logements correspondants (162), tels que par exemple des perçages, de l'écrou de serrage (117) ou du disque de serrage (121), par accouplement positif de la pièce rapportée (156) dans le sens périphérique.

5. Dispositif de serrage selon la revendication 4, caractérisé en ce que les pièces de verrouillage (161) sont disposées à des distances angulaires périphériques, de préférence de même grandeur, les unes des autres.

6. Dispositif de serrage selon la revendication 4 ou 5, caractérisé en ce que les pièces de verrouillage (161) sont constituées sous la forme de pattes repliées sensiblement à angle droit à partir du plan de la section annulaire plate et plane (157) de la pièce usinée en tôle.

7. Dispositif de serrage selon l'une des revendications 1 à 6, caractérisé en ce que la pièce rapportée (156) porte au moins sur la zone périphérique sur laquelle s'étendent les corps d'appui (150) la surface d'appui (160) associée à la surface de support de corps d'appui (153) s'étendant en conséquence en forme de cône tronqué du côté de l'écrou de serrage ou du côté du disque de serrage.

8. Dispositif de serrage selon la revendication 7, caractérisé en ce que la pièce rapportée (156) présente des segments (159) qui portent sur leur face supérieure (160), en particulier des segments annulaires, dont l'étendue angulaire périphérique correspond au moins de façon approximative à celle de chaque corps d'appui (150).

9. Dispositif de serrage selon l'une des revendications 2 à 8, caractérisé en ce que les segments (159), en particulier les segments annulaires, sont constitués sous la forme de sections de tôle repliées à partir du plan de la section annulaire plate et plane (157) de la pièce usinée en tôle.

10. Dispositif de serrage selon la revendication 9, caractérisé en ce que les sections de tôle sont repliées du moins à peu près sous le même angle que celui sous lequel s'étend une surface d'appui (126) de l'écrou de serrage (117) ou du disque de serrage (121), surface sur laquelle reposent et s'appuient axialement les sections de tôle.

11. Dispositif de serrage selon la revendication 9 ou 10, caractérisé en ce que la surface d'appui (160) de la pièce rapportée (156) s'étend sous un angle d'obliquité d'environ 15°.

12. Dispositif de serrage selon l'une des revendications 7 à 11, caractérisé en ce que la surface d'appui correspondante (160), en particulier le segment (159) respectif qui porte celle-ci, s'étend respectivement sur un angle d'environ 50° à 60°.

13. Dispositif de serrage selon l'une des revendications 8 à 12, caractérisé en ce que les segments (159) tels qu'en particulier des segments annulaires sont disposés à des intervalles angulaires, les uns des autres de préférence de même grandeur.

14. Dispositif de serrage selon l'une des revendications 2 à 13, caractérisé en ce que l'on durcit la pièce usinée en tôle, du moins sur sa surface d'appui (162) sur les segments (159) tels qu'en particulier les segments annulaires.

15. Dispositif de serrage selon l'une des revendications 1 à 14, caractérisé en ce que chaque butée (131) associée à un corps de roulement (124) - en partant de la section annulaire plane et plate (157) - est repliée à peu près à angle droit et fait saillie à partir de ce plan sur la piste du corps de roulement (124).

16. Dispositif de serrage selon la revendication 15, caractérisé en ce que la butée (131) est formée à partir d'une découpe en tôle (163) de la pièce usinée, la tôle étant repliée pour former une boîte, un tube ou analogue présentant en section transversale la forme d'un triangle, d'un carré, d'un polygone, d'un cercle ou analogue.

17. Dispositif de serrage selon la revendication 16, caractérisé en ce que la forme et/ou la grandeur de la découpe repliée en tôle (163) est choisie de façon du moins assez grande pour qu'un corps de roulement (124) associé trouve appui d'un côté et que l'extrémité correspondante du ressort (138) trouve appui du côté situé en regard.

18. Dispositif de serrage selon l'une des revendications 1 à 17, caractérisé en ce que la pièce rapportée (156) présente respectivement dans les intervalles périphériques formés entre deux segments (159), en particulier des segments annulaires qui portent sur leur face supérieure la surface d'appui correspondante (160) et se suivent l'un l'autre à une certaine distance dans le sens périphérique, une ou plusieurs pièces de butée (164) faisant davantage saillie au-dessus de la surface d'appui oblique (160), ces pièces de butée mettant en position les corps d'appui (150) dans le sens périphérique.

19. Dispositif de serrage selon la revendication 18, caractérisé en ce que les pièces de butée (164) sont constituées sous la forme de pattes découpées à partir de la pièce usinée en tôle et séparées des sections de tôle repliées portant les surfaces d'appui obliques (160), pattes qui sont cambrées sur la surface d'appui oblique (160).

20. Dispositif de serrage selon la revendication 18 ou 19, caractérisé en ce qu'à l'intérieur d'un intervalle périphérique sont disposées deux pièces de butée (164) telles qu'en particulier des pattes situées à une certaine distance l'une de l'autre dans le sens périphérique, une pièce de butée (164) telle qu'en particulier une patte, étant associée à l'extrémité en regard d'un corps d'appui (150) et l'autre pièce de butée (164) telle qu'en particulier l'autre patte, étant associée à l'extrémité en regard du corps d'appui (150) immédiatement suivant qui sert d'organe de positionnement (155).

21. Dispositif de serrage selon la revendication 20, caractérisé en ce que dans la zone des intervalles entre respectivement deux pièces de butée (164) telles qu'en particulier des pattes, on forme une découpe en tôle en forme de languette (165) de la pièce usinée en tôle, languette qui fait saillie vers le haut dans la zone intermédiaire entre deux corps d'appui (150).

22. Dispositif de serrage selon la revendication 21, caractérisé en ce que chaque découpe de tôle faisant saillie vers le haut (165) est associée à peu près au même endroit du pourtour de la pièce usinée en tôle, qu'une pièce de verrouillage (161) elle qu'en particulier un nez.

23. Dispositif de serrage selon la revendication 21 ou 22, caractérisé en ce que chaque découpe en tôle faisant saillie vers le haut (165) est disposée sur le côté intérieur annulaire de la pièce usinée en tôle.

24. Dispositif de serrage selon l'une des revendications 1 à 23, caractérisé en ce que chaque pièce de verrouillage (161), en particulier chaque nez et/ou chaque découpe en tôle repliée, formant une butée (131), est disposée sur le côté extérieur annulaire de la pièce usinée en tôle.

25. Dispositif de serrage selon l'une des revendications 21 à 24, caractérisé en ce que la découpe en tôle en forme de languette, faisant saillie vers le haut, présente une section de patte cambrée oblique (166) au-dessus du niveau de la surface d'appui oblique (160), section qui est orientée de préférence radialement vers l'intérieur.

26. Dispositif de serrage selon la revendication 25, caractérisé en ce qu'une section terminale (167) repliée par rapport à la section (166) en forme de patte et orientée radialement vers l'extérieur, est raccordée à cette section oblique (166) en forme de patte.

27. Dispositif de serrage selon la revendication 26, caractérisé en ce que la section en forme de patte (166) cambrée oblique et la section terminale (167) qui s'y raccorde, forment en section transversale à peu près un V allongé dont l'ouverture est orientée radialement vers l'extérieur.

28. Dispositif de serrage selon l'une des revendications 21 à 27, caractérisé en ce que la découpe en tôle en forme de languette faisant saillie vers le haut (165), en particulier la section en forme de patte (166) et la section terminale (167), forme un dispositif de verrouillage pour le ressort (138), au moins lors du montage.

29. Dispositif de serrage selon l'une des revendications 1 à 28, caractérisé en ce que chaque section de tôle (159) cambrée portant la surface d'appui oblique (160), et/ou chaque section de tôle (163) repliée formant respectivement une butée (131), et/ou chaque pièce de verrouillage (161) telle qu'en particulier chaque nez, et/ou chaque pièce de butée (164) formant un organe de positionnement (155) comme en particulier chaque patte, et/ou chaque découpe en tôle (165) faisant saillie vers le haut en forme de languette, sont obtenues par emboutissage profond à partir de la pièce usinée en tôle.

30. Dispositif de serrage pour le blocage axial d'un outil (115) en forme de disque, en particulier d'un disque de meulage, sur une bride (116) d'une broche entraînée, avec un écrou de serrage (117) pouvant être vissé sur un appendice fileté terminal de la broche et avec un disque de serrage (121) disposé axialement entre l'outil (115) et l'écrou de serrage (117) en s'appuyant sur l'écrou de serrage (117), disque de serrage qui peut s'appuyer contre l'outil (115) et peut presser celui-ci contre la bride (116), dispositif de serrage caractérisé en ce que le disque de serrage (121) est couplé à l'écrou de serrage (117) de façon à pouvoir coulisser, mais toutefois sans pouvoir tourner, et s'appuie axialement au moyen de corps d'appui (150) maintenus entre des surfaces d'appui (125, 126) du disque de serrage (121) et de l'écrou de serrage (117), en ce qu'entre le disque de serrage (121) et l'écrou de serrage (117) on dispose un organe d'actionnement (128), en ce que les corps d'appui (150) sont sollicités radialement au moyen de corps de roulement (124) guidés et roulant sur des pistes (151, 132) de ceux-ci et de l'organe d'actionnement (128), en ce que l'organe d'actionnement (128) presse les corps de roulement (124) dans l'une des directions correspondant au sens de blocage contre des butées (131) du disque de serrage (121) et peut tourner en sens contraire le long des pistes (151, 132) jusque dans des évidements (133) débouchant dans celles-ci et respectivement associés radialement, les corps d'appui (150) étant radialement déchargés et le disque de serrage (121) étant axialement déchargé de la pression de serrage, et en ce qu'une pièce rapportée (156) constituée sous la forme d'une pièce usinée en tôle est réalisée sous la forme d'un élément élastique exerçant une force axiale de ressort agissant entre l'écrou de serrage (117) et le disque de serrage (121) et les écartant l'un de l'autre.

31. Dispositif de serrage selon la revendication 30, caractérisé par des languettes élastiques repliées de la pièce usinée en tôle, qui reposent axialement sur le disque de serrage (121) et/ou l'écrou de serrage (117), de préférence en étant précontraintes.

32. Dispositif de serrage selon l'une des revendications 18 à 31, caractérisé en ce que des languettes élastiques sont formées à travers les pièces de butée (164) faisant saillie vers le haut et constituées comme des organes de positionnement (155) tels qu'en particulier des pattes, et/ou à travers les découpes en tôle (165) en forme de languettes faisant saillie vers le haut, en particulier leurs sections en forme de pattes (166) et leurs sections terminales (167) qui s'y raccordent.

33. Dispositif de serrage selon la revendication 32, caractérisé en ce que les parties formant les languettes élastiques sont repliées et cambrées suffisamment pour que celles-ci s'appuient élastiquement contre le disque de serrage (121) et/ou l'écrou de serrage (117).

34. Dispositif de serrage selon l'une des revendications 1-33, caractérisé en ce que l'entraîneur respectif (134) de l'organe d'actionnement (125) est constitué sous la forme d'un nez réalisé d'une seule pièce avec celui-ci et faisant saillie radialement vers l'intérieur.

35. Dispositif de serrage selon la revendication 34, caractérisé en ce que l'organe d'actionnement (128) est constitué sous la forme d'une pièce usinée monobloc telle qu'en particulier une pièce frittée.

36. Dispositif de serrage selon l'une des revendications 1 à 35, caractérisé en ce que les corps de roulement (124) sont constitués sous la forme de rouleaux cylindriques qui roulent respectivement sur des pistes cylindriques correspondantes (132, 151).

37. Dispositif de serrage selon l'une des revendications 1 à 36, caractérisé en ce que l'organe d'actionnement (128) et en particulier la bague (129) vient en prise avec le disque de serrage (121) et l'entoure par un collet annulaire à peu près cylindrique (130), tandis qu'un autre collet annulaire à peu près cylindrique (130a) entoure l'écrou de serrage (117) extérieurement en partie du moins.

38. Dispositif de serrage selon la revendication 37, caractérisé en ce qu'entre chaque collet annulaire (130, 130a) et le disque de serrage (121) ou l'écrou de serrage (117) on dispose un élément d'étanchéité (101, 101a) tel qu'en particulier une bague élastique d'étanchéité.
